# EUROPÄISCHE PATENTSCHRIFT

(11) **EP 2 655 921 B1**
(45) Veröffentlichungstag und Bekanntmachung des Hinweises auf die Patenterteilung: **19.09.2018**
(21) Anmeldenummer: 11815679.3
(22) Anmeldetag: 05.12.2011
(51) Int. Cl.: F16F 15/14

(54) **FLIEHKRAFTPENDELEINRICHTUNG**
CENTRIFUGAL PENDULUM MECHANISM
DISPOSITIF PENDULAIRE CENTRIFUGE

(30) Priorität: 23.12.2010 DE 102010055897
(43) Veröffentlichungstag der Anmeldung: 30.10.2013
(73) Patentinhaber: Schaeffler Technologies AG & Co. KG, 91074 Herzogenaurach (DE)
(72) Erfinder: MOVLAZADA, Parviz, 76437 Rastatt (DE)
(86) Internationale Anmeldenummer: PCT/DE2011/002077
(87) Internationale Veröffentlichungsnummer: WO 2012/083920

(56) Entgegenhaltungen:
- DE-A1-102009 037 481
- DE-A1-102009 042 836

## Beschreibung

Die vorliegende Erfindung betrifft eine Fliehkraftpendeleinrichtung, insbesondere eine Trapezfliehkraftpendeleinrichtung, für eine Dämpfereinrichtung und/oder eine Drehmomentübertragungseinrichtung, insbesondere für einen Antriebsstrang eines Kraftfahrzeugs. Ferner betrifft die Erfindung eine Dämpfereinrichtung oder eine Drehmomentübertragungseinrichtung insbesondere für einen Antriebsstrang eines Kraftfahrzeugs; z. B. ein Fliehkraftpendel, einen Drehmomentwandler, eine Kupplung, eine Föttingerkupplung, eine Kupplungsbaugruppe, einen Dämpfer, einen Drehschwingungsdämpfer, einen Turbinendämpfer, einen Pumpendämpfer, einen Zweimassenwandler oder ein Zweimassenschwungrad, oder Kombinationen davon; wobei die die Dämpfereinrichtung bzw. die Drehmomentübertragungseinrichtung eine erfindungsgemäße Fliehkraftpendeleinrichtung aufweist.

An Wellen von periodisch arbeitenden Maschinen, z. B. an einer Kurbelwelle eines Verbrennungsmotors eines Kraftfahrzeugs, treten bei einer Rotationsbewegung der Welle überlagernde Drehschwingungen auf, wobei sich deren Frequenz mit einer Drehzahl der Welle ändert. Durch Verbrennungsvorgänge des Verbrennungsmotors werden insbesondere im Zugbetrieb Drehschwingungen im Antriebsstrang des Kraftfahrzeugs angeregt. Zur Verringerung dieser Drehschwingungen kann ein Fliehkraftpendel vorgesehen sein, das Drehschwingungen über einen größeren Drehzahlbereich des Verbrennungsmotors, idealerweise über dessen gesamten Drehzahlbereich hinweg, tilgen kann. Den Fliehkraftpendeln liegt das Prinzip zugrunde, dass deren Pendelmassen fliehkraftbedingt bestrebt sind, eine Rotationsachse bei Einleitung einer Drehbewegung in größtmöglichem Abstand zu umkreisen. Die Drehschwingungen in der Welle führen zu einer pendelnden Relativbewegung der Pendelmassen, wobei das Fliehkraftpendel eine zur Drehzahl proportionale Eigenfrequenz besitzt, so dass Drehschwingungen mit Frequenzen, die der Drehzahl der Welle in gleicher Weise proportional sind, über einen großen Drehzahlbereich hinweg tilgbar sind.

Ein Fliehkraftpendel umfasst eine Mehrzahl von Pendelmassen, die mittels Führungselementen an einem rotierenden Pendelmassenträger aufgehängt sind und entlang vorgegebener Führungsbahnen eine Relativbewegung zu diesem Pendelmassenträger ausführen können, um hierbei einen variablen Abstand zur Rotationsachse des Pendelmassenträgers einnehmen zu können. Als eine Folge der Drehschwingungen im Antriebsstrang werden die Pendelmassen zum Pendeln bzw. Schwingen angeregt, wobei sich deren Schwerpunkte permanent und zeitversetzt zu den Drehschwingungen im Antriebsstrang verändern, was durch eine mechanische Rückkopplung eine Dämpfung der Drehschwingungen bewirkt. Eine effiziente Dämpfung kann durch entsprechende Abstimmung der Pendelmassen und deren Führungsbahnen erfolgen. - In bestimmten Betriebszuständen des Fliehkraftpendels kann es zu einem Anstoßen der Pendelmassen an den Pendelmassenträger, einem Aneinanderstoßen der in Umfangsrichtung benachbarten Stirnseiten der Pendelmassen und/oder einem Anstoßen der Führungselemente in den betreffenden Längsenden der Führungsbahnen des Pendelmassenträgers und/oder der Pendelmassen kommen, wodurch Funktionsstörungen des Fliehkraftpendels und Geräusche hervorgerufen werden, was zu einem subjektiv wahrnehmbaren Verlust an Fahr- und Geräuschkomfort führt.

Das Unterbringen der Pendelmassen mit einem entsprechenden Sicherheitsabstand in Umfangsrichtung zueinander führt zu einer unerwünschten Verringerung der Pendelmassen und/ oder das Begrenzen der Schwingwinkel führt zu einem Verlust einer Effektivität des Fliehkraftpendels. Ferner ist die Anwendung von Gummielementen unter Aspekten der Wärmedehnung und Verformung unter Krafteinwirkung hinsichtlich Toleranz schlecht berechenbar. Eine Zuverlässigkeit und eine Lebensdauer von Gummielementen in einer Ölumgebung stellt sich als problematisch dar. Ferner verhindern Gummielemente Zusammenstöße zwischen in Umfangsrichtung benachbarten Pendelmassen nicht, sondern nur zwischen Pendelmassen und dem Pendelmassenträger. Des Weiteren sind Anschlagelemente bei Fliehkraftpendeln mit Trapezanordnung der Pendelmassen nur bedingt einsetzbar.

Die DE 198 31 160 A1 offenbart ein Fliehkraftpendel für eine um eine Achse rotierbare Welle mit einer Trapezanordnung der Pendelmassen. Im Betrieb des Fliehkraftpendels führt eine Pendelmasse eine rein translatorische Bewegung relativ zu einem Pendelmassenträger des Fliehkraftpendels aus. Dies wird durch eine parallele bifilare Aufhängung der Pendelmassen erreicht. Damit ein kleiner Bauraum gut ausgenutzt werden kann, werden vergleichsweise große Pendelmassen vorgesehen, wobei in Umfangsrichtung des Pendelmassenträgers benachbarte Pendelmassen an den einander zugewandten Stirnseiten abgerundet ausgebildet sind und einander auslenkungsunabhängig lose anliegend berühren. Mittels der stirnseitigen bogenförmigen Konfiguration der Pendelmassen können sich verhakende Pendelmassen im Wesentlichen ausgeschlossen werden, dafür ist jedoch eine Geräuschentwicklung um so größer, da die einander zugewandten Stirnseiten der Pendelmassen unabhängig von einer Auslenkung der Pendelmassen aneinander anliegen, d. h. bei wechselnden Betriebsbedingungen immer wieder aneinander stoßen.

DE102009042836 A1 offenbart ein Fliehkraftpendel für eine Drehmomentübertragungseinrichtung mit einem Pendelflansch und an diesem beidseitig über den Umfang verteilten Pendelscheiben, wobei jeweils zwei sich axial gegenüberliegende Pendelscheiben zu einer Pendelmasse gefügt sind.

Es ist eine Aufgabe der Erfindung, eine verbesserte Fliehkraftpendeleinrichtung für eine Dämpfereinrichtung und/oder eine Drehmomentübertragungseinrichtung, insbesondere für einen Antriebsstrang eines Kraftfahrzeugs, anzugeben. Ferner ist es eine Aufgabe der Erfindung eine verbesserte Dämpfereinrichtung und/oder eine verbesserte Drehmomentübertragungseinrichtung insbesondere für einen Antriebsstrang eines Kraftfahrzeugs, zur Verfügung zu stellen. Hierbei soll die erfindungsgemäße Fliehkraftpendeleinrichtung bzw. ein mit der erfindungsgemäßen Fliehkraftpendeleinrichtung ausgerüstetes Fliehkraftpendel geringe Geräuschemissionen aufweisen. Ferner sollen Funktionsstörungen der Fliehkraftpendeleinrichtung, die aufgrund unkontrollierter Bewegungen der Pendelmassen hervorgerufenen werden verringert sein. Hierbei soll insbesondere ein Anstoßen der Pendelmassen an den Pendelmassenträger, ein Aneinanderstoßen der in Umfangsrichtung benachbarten Stirnseiten der Pendelmassen und/oder ein Anstoßen der Führungselemente in den betreffenden Längsenden der Führungsbahnen des Pendelmassenträgers und/oder der Pendelmassen verringert sein.
Die Aufgabe der Erfindung wird mittels einer Fliehkraftpendeleinrichtung, insbesondere einer Trapezfliehkraftpendeleinrichtung, für eine Dämpfereinrichtung und/oder eine Drehmomentübertragungseinrichtung, insbesondere für einen Antriebsstrang eines Kraftfahrzeugs, gemäß Anspruch 1; und mittels einer Dämpfereinrichtung oder einer Drehmomentübertragungseinrichtung, bevorzugt für einen Antriebsstrang eines Kraftfahrzeugs; z. B. ein Fliehkraftpendel, einen Drehmomentwandler, eine Kupplung, eine Föttingerkupplung, eine Kupplungsbaugruppe, einen Dämpfer, einen Drehschwingungsdämpfer, einen Turbinendämpfer, einen Pumpendämpfer, einen Zweimassenwandler oder ein Zweimassenschwungrad, oder Kombinationen davon; gemäß Anspruch 6 gelöst. Vorteilhafte Weiterbildungen der Erfindung ergeben sich aus den jeweils abhängigen Ansprüchen.
Die erfindungsgemäße Fliehkraftpendeleinrichtung weist einen um eine Rotationsachse rotierbaren Pendelmassenträger auf, an welchem in Umfangsrichtung eine Mehrzahl gegenüber dem Pendelmassenträger bewegbare Pendelmassen oder Pendelmassenpaare vorgesehen sind. Gemäß der Erfindung sind zwei in Umfangsrichtung des Pendelmassenträgers direkt benachbarte Pendelmassen oder Pendelmassenpaare über ein erfindungsgemäßes Dämpferelement miteinander mechanisch gekoppelt oder mechanisch koppelbar. Bevorzugt ist die Erfindung bei Fliehkraftpendeln mit Trapezanordnung und einem regulierbaren Tilgungsordnungsverlauf für eine Stoßdämpfung und für eine Verhinderung von Klappergeräuschen einsetzbar. - Nachfolgend ist nur noch von einem jeweiligen oder betreffenden Pendelmassenpaar bzw. -paaren die Rede; das nachfolgend Gesagte soll jedoch auch auf jeweilige bzw. betreffende (einzelne) Pendelmassen zutreffen. In einem solchen Fall entfällt lediglich ein zweiter Axialbereich der Fliehkraftpendeleinrichtung, der zu einem ersten Axialbereich symmetrisch aufgebaut ist; d. h. im Fall von Pendelmassenpaaren sind die beiden Axialbereiche ähnlich oder im Wesentlichen identisch konfiguriert und lediglich durch den Pendelmassenträger voneinander getrennt. Ferner können die jeweiligen Ausführungsformen der nachfolgend beschriebenen ersten und zweiten Variante des erfindungsgemäßen Dämpferelements auch unabhängig von der erfindungsgemäßen Fliehkraftpendeleinrichtung sein.

In einem nicht erfindungsgemäßen Beispiel ist das Dämpferelement zwischen den zwei direkt benachbarten, d. h. betreffenden oder jeweiligen, Pendelmassenpaaren als ein Federelement ausgebildet, das diese Pendelmassenpaare mechanisch miteinander verbindet. Hierbei kann das Federelement bei bestimmten Relativbewegungen zwischen den betreffenden Pendelmassenpaaren federweich und bei bestimmten anderen Relativbewegungen zwischen den betreffenden Pendelmassenpaaren federhart ausgebildet sein, d. h. in bestimmten Bereichen ist das Federelement federweich und in bestimmten Bereichen ist das Federelement federhart ausgebildet, wobei diese Bereiche voneinander getrennt oder einander überlappend im Federelement vorgesehen sein können. Das Federelement kann dabei in Radialrichtung der Fliehkraftpendeleinrichtung federweich, insbesondere in Umfangsrichtung abgesehen von einem Federbereich ebenfalls federweich, bevorzugt in einer Axialrichtung federhart und insbesondere bevorzugt im Federbereich ebenfalls federhart ausgebildet sein.-Durch das, abgesehen vom Federbereich, in Radial- und in Umfangsrichtung elastisch ausgestaltete Federelement kann ein Nachgeben in diesen Richtungen während einer Schwingung der Pendelmassen ohne nennenswerten Widerstand erfolgen. Ein Abfedern der betreffenden Pendelmassenpaare gegeneinander erfolgt z. B. erst beim Zusammenklappen der betreffenden Pendelmassenpaare; d. h. wenn das Federelement mit einer Federseite im Wesentlich vollständig an einem Pendelmassenpaar anliegt und sich das andere Pendelmassenpaar auf das erste zubewegt.

Bevorzugt sind alle Pendelmassenpaare des Pendelmassenträgers mittels Federelementen ringförmig zu einem Verbund zusammen geschlossen. Hierbei sollte eine Einstellung der Federelemente symmetrisch sein, damit sich keine Schwerpunktsverschiebung der Pendelmassenpaare und Verkippmomente an den Pendelmassenpaaren ergeben. Insbesondere durch eine in Axialrichtung federharte Ausbildung der Federelemente sind Anschläge der Pendelmassenpaare an dem Pendelmassenträger wirksam verhindert. Ferner werden Zusammenstöße der betreffenden Pendelmassen bei maximaler Auslenkung und in Übergangsphasen im Betrieb des Fliehkraftpendels durch die bevorzugt als Blechfedern ausgebildeten Federelemente wirksam verhindert. - In bevorzugten Ausführungsformen des nicht erfindungsgemäßen Beispiels ist das Federelement als eine Lamellen- oder eine Streifenfeder ausgebildet, die die betreffenden Pendelmassenpaare miteinander mechanisch verbindet, wobei diese Pendelmassenpaare in Abhängigkeit einer gegenseitigen Position gegeneinander federnd vorsehbar sind. Bevorzugt ist jeweils ein Befestigungsbereich der Lamellenfeder an einem betreffenden Pendelmassenpaar festgelegt, wobei sich zwischen den beiden Befestigungsbereichen zwischen den betreffenden Pendelmassenpaaren der Federbereich der Lamellenfeder erstreckt.

In bevorzugten Ausführungsformen des nicht erfindungsgemäßen Beispiels ist eine betreffende Durchgangsausnehmung des Pendelmassenträgers, durch welche sich ein Zapfen, z. B. ein Niet oder ein Abstandsniet, des Befestigungsbereichs des Federelements hindurch erstreckt, derart ausgelegt, dass der Zapfen, bei im Wesentlichen allen ihm möglichen Positionen im Betrieb der Fliehkraftpendeleinrichtung bzw. des Fliehkraftpendels, von einer Begrenzung der Durchgangsausnehmung entfernt bleibt. D. h. hier sind entsprechende Freiwinkel vorgesehen, die die Durchgangsausnehmung derart vergrößern, dass der Zapfen des Befestigungsbereichs des Federelements in den meisten Betriebszuständen nicht an einer Begrenzung dieser Durchgangsausnehmung anschlagen kann. Ferner können eine Führungsbahn des Pendelmassenträgers, eine Führungsbahn des betreffenden Pendelmassenpaars und/oder ein jeweiliges Führungselement derart aufeinander abgestimmt bzw. ausgelegt sein, dass bei Übergangsphasen der sich bewegenden Pendelmassenpaare und/oder einem maximalen Schwingwinkel der Fliehkraftpendeleinrichtung ein gegenseitiger Anschlag, abgesehen von den Federelementen, nahezu ausschließlich zwischen den Pendelmassenpaaren erfolgt, wobei ferner bevorzugt ein gegenseitiger Anschlag dieser drei Komponenten im Wesentlichen in Umfangsrichtung im Wesentlichen vermieden ist.

In Ausführungsformen des nicht erfindungsgemäßen Beispiels können betreffende Pendelmassenpaare über ein einzelnes Federelement auf einer einzigen Axialseite, oder über Federelemente jeweils auf beiden Axialseiten des Pendelmassenträgers mechanisch gekoppelt sein. Ferner ist es bevorzugt, dass ein Befestigungsbereich des Federelements zwei axial direkt zueinander benachbarte Pendelmassen eines Pendelmassenpaars auf einen bestimmten Abstand zueinander hält, dies kann z. B. mittels des Zapfens, des Niets oder Abstandsniets erfolgen. Die Führungsbahnen des Pendelmassenträgers und/oder der Pendelmassenpaare können zur Vermeidung von Kollisionen zwischen Führungselementen und dem Pendelmassenträger einen Freiwinkel aufweisen (siehe dazu analog oben). Bevorzugt beträgt eine maximale axiale Tiefe des Federelements oder des Federbereichs einer axialen Tiefe einer Pendelmasse; d. h. diese fluchten in Umfangsrichtung miteinander. - In einem Übergangsbereich von einem Befestigungsbereich zum Federbereich der Lamellenfeder kann die Lamellenfeder federweich ausgelegt sein. Ferner ist der Federbereich der Lamellenfeder im Wesentlichen über seine gesamte Erstreckung federhart ausgelegt, wobei der Federbereich wenigstens einen Federgang, insbesondere einen Zickzack-, einen Kurven- oder einen Dreiecksgang aufweist. Andere Formen eines solchen Federgangs können natürlich angewendet werden, solange der Federbereich eine Federkraft zwischen den beiden Pendelmassenpaaren zur Verfügung stellt. Des Weiteren kann der Federbereich der Lamellenfeder zwei einander radial gegenüberliegende federnde Bereiche aufweisen.

Bei der Erfindung ist das Dämpferelement zwischen den zwei direkt benachbarten, d. h. betreffenden oder jeweiligen, Pendelmassenpaaren als ein Anschlagelement ausgebildet, an welchem die betreffenden Pendelmassenpaare in Umfangsrichtung ansitz- oder anschlagbar sind. Das Anschlagelement ist bevorzugt in einer Führungsbahn für ein Führungselement im Pendelmassenträger beweglich vorgesehen, wobei in dieser Führungsbahn bevorzugt ebenfalls wenigstens ein Pendelmassenpaar mit einem Führungselement geführt ist. Hierbei ist das bevorzugt integrale Anschlagelement und/oder die betreffende Führungsbahn im Pendelmassenträger derart dimensioniert, dass das Anschlagelement in dieses bevorzugt mit seiner Längserstreckung seitlich einfüg- und einrichtbar ist. In einem zeitlichen Anschluss daran werden die Pendelmassen eingebracht und aneinander festgelegt, bevorzugt vernietet, wobei bei einer jeden möglichen Position der Pendelmassen zueinander ein Herausfallen der Anschlagelemente nicht möglich ist; d. h. die betreffende Führungsbahn im Pendelmassenträger, das Anschlagelement und die Pendelmassenpaare sind derart angeordnet und/oder ausgelegt, dass das Anschlagelement auch in ungünstigen Positionen betreffender Pendelmassenpaare im Betrieb der Fliehkraftpendeleinrichtung nicht aus der jeweiligen Führungsbahn herausfallen kann.

In einer Ausführungsform der Erfindung ist das Anschlagelement, insbesondere ein Anschlagkörper des Anschlagelements, ein massives Element, das bevorzugt aus einem Kunststoff aufgebaut ist. Hierbei ist das Anschlagelement bevorzugt einstückig, insbesondere stofflich einstückig ausgebildet, und der Kunststoff ist bevorzugt ein harter und/oder ein verschleißfester Kunststoff. Das Anschlagelement selbst ist insbesondere als ein langgestreckter Körper ausgebildet, dessen Anschlagflächen für die betreffenden Pendelmassenpaare in Umfangsrichtung im Wesentlichen parallel zueinander ausgerichtet sind. - In einer anderen Ausführungsform der Erfindung ist das Anschlagelement als ein Federanschlagelement ausgebildet, das in Umfangsrichtung des Pendelmassenträgers an seinen beiden Längsseiten jeweils wenigstens eine Federeinrichtung aufweist. Eine einzelne Federeinrichtung des Federanschlagelements ist dabei bevorzugt als eine ein- oder mehrstufige Parallel- oder Reihenanordnung von Blattfedern ausgebildet, an welchen ein Pendelmassenpaar ansitz- oder anschlagbar ist. Hierbei ist das Anschlagelement ebenfalls bevorzugt einstückig, insbesondere stofflich einstückig ausgebildet, wobei das Anschlagelement bevorzugt aus einem (Stanz-)Rohling aus Federstahl zurechtgebogen ist.

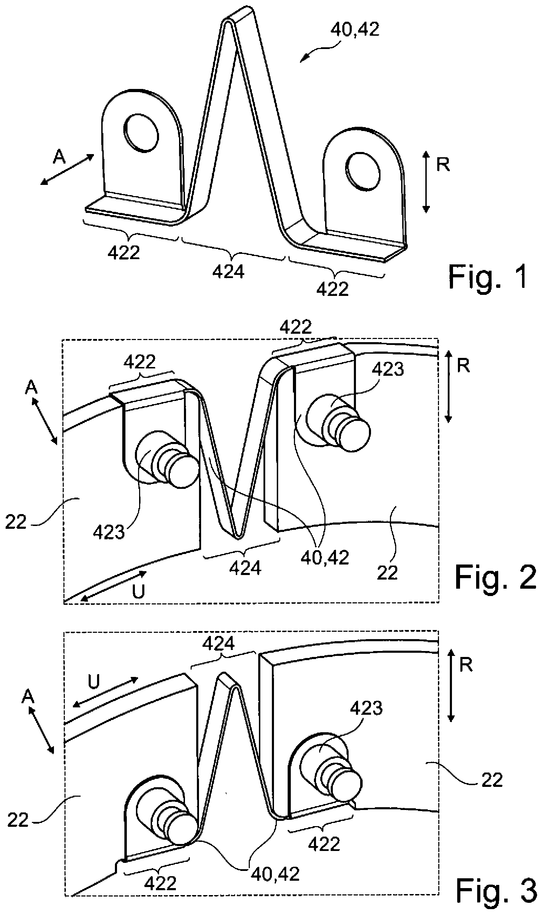

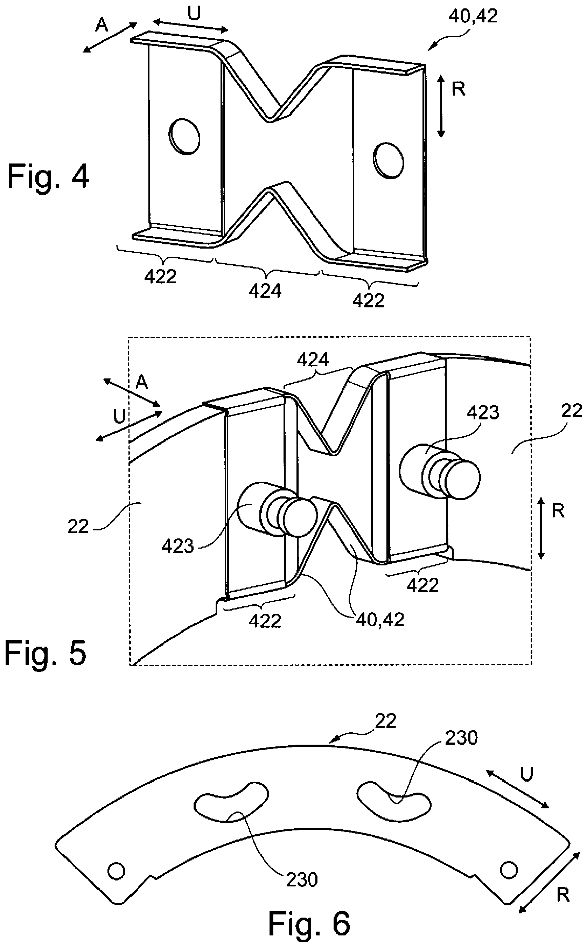

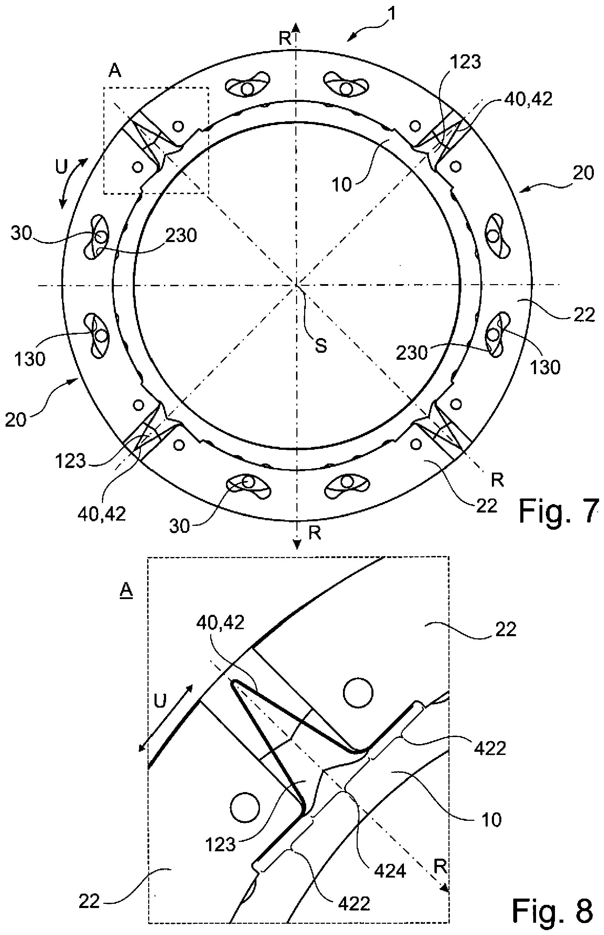

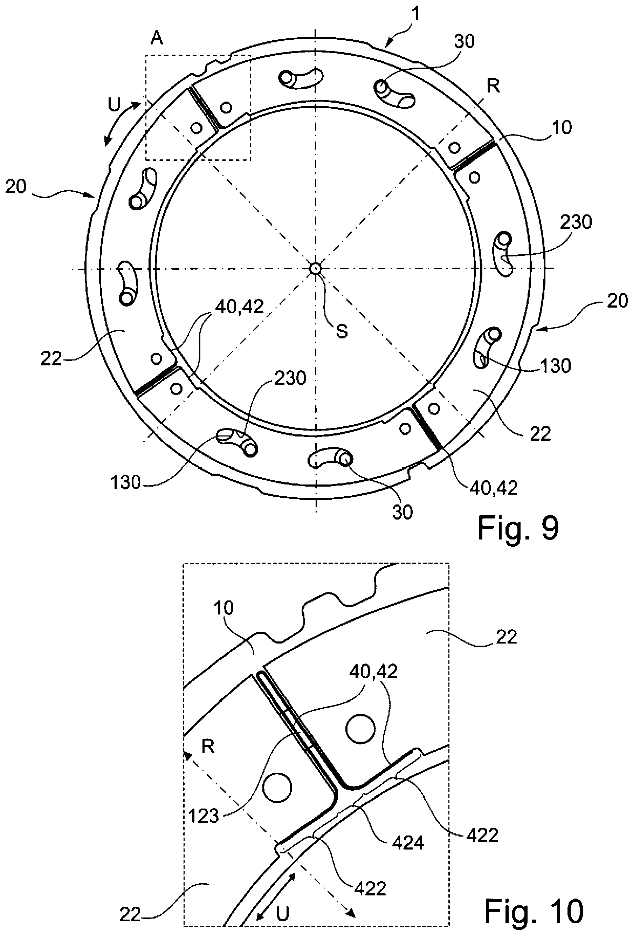

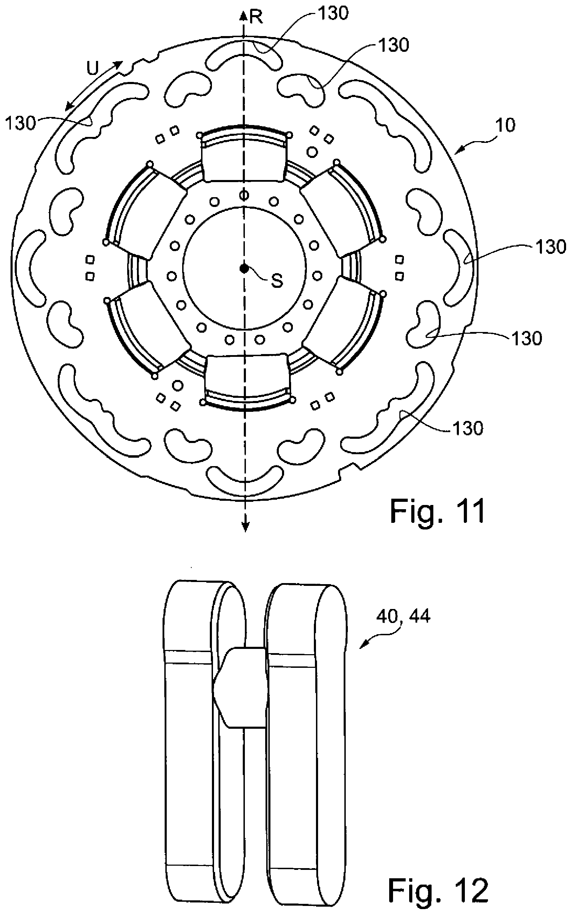

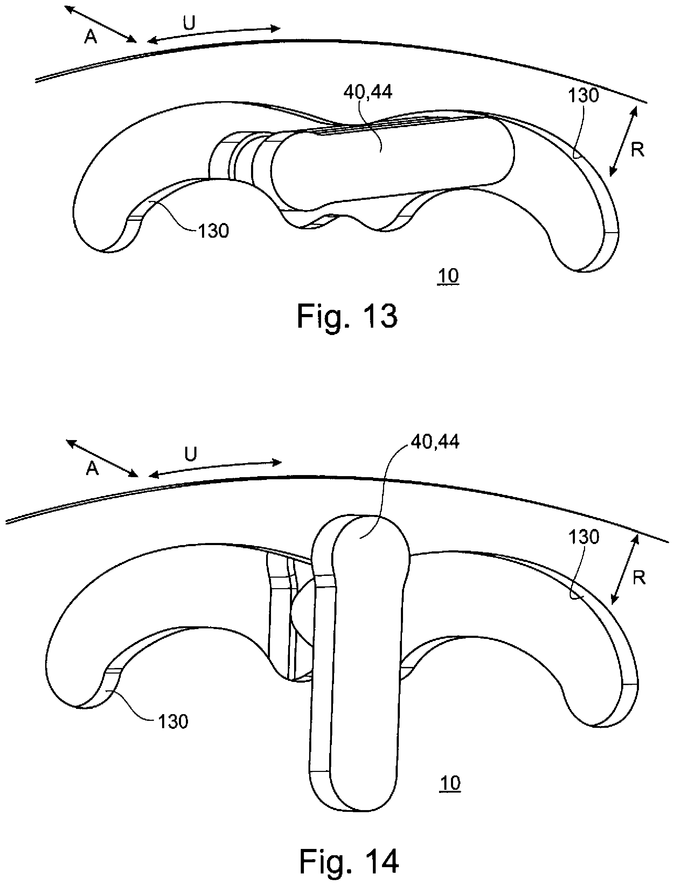

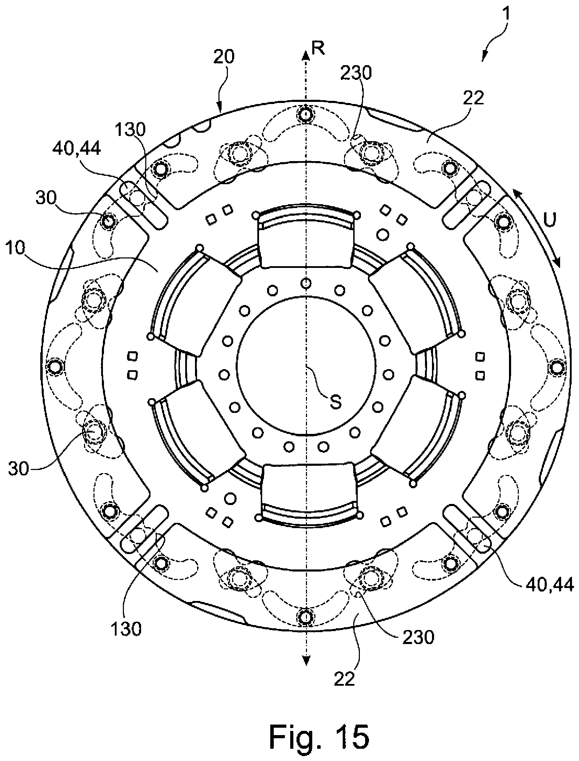

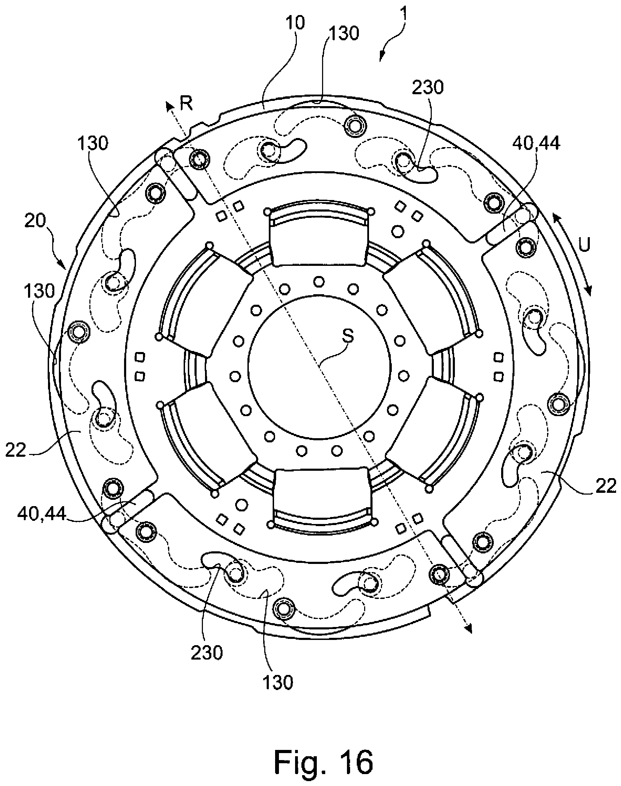

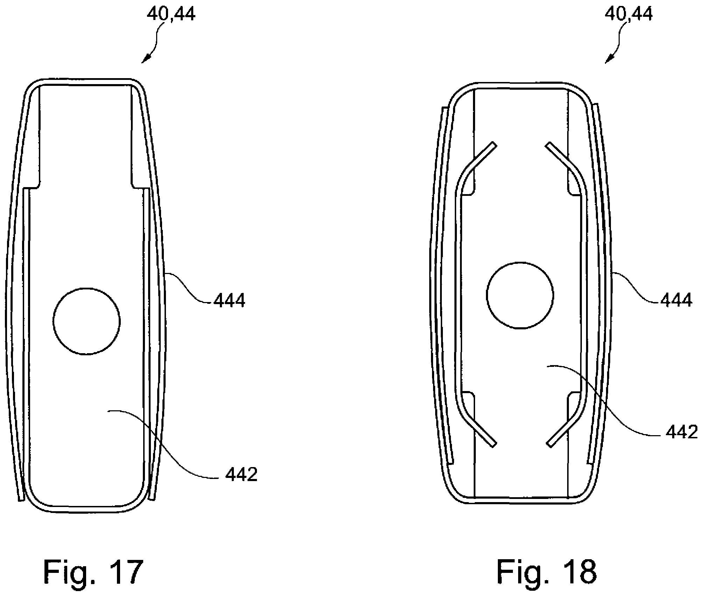

In bevorzugten Ausführungsformen der Erfindung sind eine Führungsbahn des Pendelmassenträgers, eine betreffende Führungsbahn eines Pendelmassenpaars und ein zugehöriges Führungselement derart zueinander ausgelegt bzw. abgestimmt, dass bei Übergangsphasen der sich bewegenden betreffenden Pendelmassenpaare und/oder einem maximalen Schwingwinkel der Fliehkraftpendeleinrichtung ein gegenseitiger Anschlag, abgesehen von den Federanschlagelementen, nahezu ausschließlich zwischen den Pendelmassenpaaren erfolgt, wobei ferner bevorzugt ein gegenseitiger Anschlag dieser drei Komponenten in Umfangsrichtung im Wesentlichen vermieden ist. Bevorzugt weisen hierfür die Führungsbahnen des Pendelmassenträgers und/oder der Pendelmassenpaare zur Vermeidung von Kollisionen zwischen Führungselementen, dem Pendelmassenträger und/oder der Pendelmassenpaare einen Freiwinkel auf. Ferner ist das Anschlagelement für betreffende Pendelmassenpaare bevorzugt gedoppelt ausgebildet, wobei die beiden Elemente insbesondere über ein Abstandsniet aneinander festgelegt sind. Das im Pendelmassenträger montierbare Anschlagelement kann an einem radial äußeren Längsendabschnitt in Umfangsrichtung breiter ausgebildet sein, als in einem Mittenabschnitt oder einem radial inneren Endabschnitt. Eine maximale axiale Tiefe einer Anschlagfläche oder des Federbereichs des Anschlagelements entspricht der einer Pendelmasse; d. h. diese fluchten in Umfangsrichtung wiederum miteinander.
Die Erfindung wird im Folgenden anhand von Ausführungsbeispielen in Verbindung mit der beigefügten detaillierten Zeichnung näher erläutert. In der Zeichnung zeigen: die Fig. 1 bis 3 eine erste Ausführungsform einer nicht erfindungsgemäßen Fliehkraftpendeleinrichtung, wobei in einer Umfangsrichtung zwischen zwei einander direkt benachbarten Pendelmassen ein als ein einfaches Lamellenfederelement ausgebildetes Dämpferelement vorgesehen ist; die Fig. 4 und 5 eine zweite Ausführungsform der nicht erfindungsgemäßen Fliehkraftpendeleinrichtung wobei zwischen betreffenden Pendelmassen ein als doppelseitiges Lamellenfederelement ausgebildetes Dämpferelement vorgesehen ist; die Fig. 6 eine einzelne Pendelmasse; die Fig. 7 bis 10 zwei vergleichsweise stabile Extremstellungen der nicht erfindungsgemäßen Fliehkraftpendeleinrichtung bei einem minimalen (Fig. 7 und 8) und einem maximalen Schwingwinkel (Fig. 9 und 10); die Fig. 11 einen Pendelmassenträger für die Erfindung; die Fig. 12 eine erste Ausführungsform eines erfindungsgemäßen Dämpferelements, wobei das Dämpferelement als ein Anschlagelement ausgebildet ist; die Fig. 13 und 14 ein Einhängen des Anschlagelements aus Fig. 12 in den Pendelmassenträger aus Fig. 11; die Fig. 15 und 16 zwei vergleichsweise stabile Extremstellungen der erfindungsgemäßen Fliehkraftpendeleinrichtung gemäß der ersten Ausführungsform bei einem minimalen und (Fig. 15) einem maximalen Schwingwinkel (Fig. 16); und die Fig. 17 bis 21 zwei Ausführungsformen des erfindungsgemäßen Dämpferelements, wobei das Dämpferelement jeweils als ein Federanschlagelement ausgebildet ist. - Gemäß der Erfindung können die jeweils erläuterten Merkmale auch bei einer jeweilig anderen Ausführungsform der Erfindung angewendet werden.

Bei der ersten Ausführungsform des nicht erfindungsgemäßen Beispiels (siehe Fig. 1 bis 3, und auch Fig. 7 bis 10) ist das erfindungsgemäße Dämpferelement 40 für eine Fliehkraftpendeleinrichtung 1 als ein Federelement 42 ausgebildet, das selbst wiederum als ein Lamellen- 42 bzw. Streifenfederelement 42 konzipiert ist, wobei das Federelement 42 in bestimmten Situationen bzw. Anordnungen als ein Druckfederelement 42 wirkt. Hierbei besteht das Lamellenfederelement 42 bevorzugt aus einem dünnen gefalteten Federblech, welches in Umfangsrichtung U eines Pendelmassenträgers 10 der Fliehkraftpendeleinrichtung 1 zwischen zwei direkt benachbarten Pendelmassen 22 oder Pendelmassenpaaren 20 vorgesehen ist und dort mit jeweils einem Befestigungsbereich 422 befestigt ist. Zwischen den beiden in Umfangsrichtung U direkt benachbarten Befestigungsbereichen 422 erstreckt sich der Federbereich 424 des Lamellenfederelements 42, der bevorzugt nur in bestimmten Situationen, d. h. bei bestimmten Relativpositionen der Pendelmassen 22 bzw. Pendelmassenpaare 20 zueinander eine wesentliche Federkraft zwischen den Pendelmassen 22 bzw. auf die Pendelmassenpaare 20 ausübt. In davon verschiedenen Situationen bzw. gegenseitigen Positionen der Pendelmassen 22 bzw. Pendelmassenpaare 20 ist das Lamellenfederelement 42 elastisch bzw. weich bzw. federweich ausgebildet (siehe hierzu unten).
Analoges trifft bevorzugt auf alle anderen zueinander in Umfangsrichtung U direkt benachbarten Pendelmassen 22 bzw. Pendelmassenpaare 20 zu, so dass sich ein Ringverbund von Pendelmassen 22 bzw. Pendelmassenpaaren 20 bildet, die alle über Federelemente 42 bzw. Lamellenfederelemente 42 miteinander in Umfangsrichtung U federnd verbunden bzw. festgelegt sind. - Beispielweise kann zwischen zwei in Umfangsrichtung U direkt benachbarten Pendelmassenpaaren 20 nur auf einer der beiden Axialseiten des Pendelmassenträgers 10 ein einzelnes Federelement 42 bzw. Lamellenfederelement 42 zwischen den (vier) Pendelmassen 22 vorgesehen sein, wobei nur zwei in Umfangsrichtung U benachbarte Pendelmassen 22 direkt mittels des Federelements 42 bzw. Lamellenfederelements 42 federnd verbunden sind. Es ist natürlich auch möglich, auf beiden Axialseiten des Pendelmassenträgers 10 Federelemente 42 bzw. Lamellenfederelemente 42 vorzusehen, was bevorzugt ist. Letzteres ist mit den Ausführungsbeispielen nach den Fig. 1 bis 3 für die erste Ausführungsform und den Fig. 4 und 5 für die zweite Ausführungsform (siehe unten) verdeutlicht; Ersteres und auch Letzteres ist in der Zeichnung nach den Fig. 7 bis 10 dargestellt. Hierbei ist es möglich, die Federelemente 42 bzw. Lamellenfederelemente 42 wechselseitig vorzusehen. Ferner ist es möglich, statt Pendelmassenpaaren 20 lediglich Pendelmassen 22 auf einer Axialseite des Pendelmassenträgers 10 vorzusehen, was ebenfalls in den Fig. 7 bis 10 dargestellt ist. - Im Folgenden ist im Wesentlichen nur noch von einer Pendelmasse 22 bzw. betreffenden Pendelmassen 22, d. h. von in Umfangsrichtung U des Pendelmassenträgers 10 direkt benachbarten Pendelmassen 22 die Rede. Das nachfolgend Gesagte soll jedoch analog auf Pendelmassenpaare 20 und/oder die restlichen Pendelmassen 22 bzw. Pendelmassenpaare 20, sowie auch auf die eben vorgestellten Ausführungsformen des nicht erfindungsgemäßen Beispiels zutreffen.

Ein einzelner Befestigungsbereich 422 des Lamellenfederelements 42 weist bevorzugt eine flache Lasche auf, die insbesondere an einer Radialseite einer Pendelmasse 22 flach anliegt und mittels eines Zapfens bzw. einer Vernietung an/in der Pendelmasse 22 befestigt ist, wofür die Pendelmasse 22 bevorzugt eine Befestigungsausnehmung aufweist (siehe Fig. 8 und 10). Hierbei kann die Pendelmasse 22 radialseitig eine flache zum Befestigungsbereich 422 korrespondierende Ausnehmung aufweisen, in welcher der Befestigungsbereich 422 derart aufnehmbar ist, dass dieser wenigstens mit einer Radialfläche der Pendelmasse 22 fluchtet (in der Zeichnung nicht dargestellt). Für die Montage an der axialseitig gegenüberliegenden Pendelmasse 22 eines Pendelmassenpaars 20, kann der Befestigungsbereich 422 (siehe Fig. 2 und 3) gegenüberliegend zur ersten Pendelmasse 22 einen Zapfen 423, wie z. B. einen Niet 423 oder einen Abstandsbolzen 423, aufweisen, der sich durch den Pendelmassenträger 10 hindurch in eine Befestigungsausnehmung in der axial benachbarten Pendelmasse 22 hineinerstreckt und dort festgelegt ist (siehe Fig. 7 bis 10). Ferner weist der entsprechende Befestigungsbereich 422 des axial benachbarten Lamellenfederelements 42 hierfür bevorzugt ebenfalls eine Durchgangsausnehmung auf, in welcher der Zapfen 423 gleichfalls festgelegt ist. Ansonsten ist dieses zweite Lamellenfederelement 42 wie das erste aufgebaut. Entsprechend wird mit der in Umfangsrichtung U direkt benachbarten anderen Pendelmasse 22 verfahren.

Finden Pendelmassenpaare 20 Anwendung, so ist es bevorzugt, dass der/die sich durch den Pendelmassenträger 10 hindurcherstreckenden Zapfen 423 nicht in diesem geführt ist bzw. sind (siehe Fig. 8 und 9). D. h. der Pendelmassenträger 10 ist in diesem Bereich derart ausgenommen, dass der Zapfen 423 bei im Wesentlichen allen seinen Positionen in einem späteren Betrieb der Fliehkraftpendeleinrichtung 1 keinen Stoßkontakt mit dem Pendelmassenträger 10 hat. Hierfür besitzt eine betreffende Durchgangsausnehmung 123 im Pendelmassenträger 10 z. B. einen entsprechenden Freiwinkel. Der Zapfen 423 hält lediglich die Pendelmassen 22 eines Pendelmassenpaars 20 auf einem gegenseitigen Axialabstand. - Ferner ist es bevorzugt, dass der Befestigungsbereich 422 die betreffende Pendelmasse 22 an einem radialen Ende außen oder innen übergreift, wofür analog zu oben wiederum eine Ausnehmung in der betreffenden Pendelmasse 22 vorgesehen sein kann. An diesen das radiale Ende übergreifenden Abschnitt des Lamellenfederelements 42 ist in Umfangsrichtung U dann der Federbereich 424 mechanisch angeschlossen. Des Weiteren können die betreffenden Pendelmassen 22 derart ausgebildet sein, dass das Lamellenfederelement 42 radial außen (siehe Fig. 2) oder radial innen (siehe Fig. 3) zwischen den Pendelmassen 22 vorgesehen ist.

Der Federbereich 424 des Lamellenfederelements 42 weist wenigstens einen Federgang in einer Feder auf, welcher eine Federkraft zwischen den betreffenden Pendelmassen 22 zur Verfügung stellt. Dieser Federgang kann ein Zickzack-, ein Kurven- oder ein Dreiecksgang sein; andere Formen sind natürlich anwendbar. Bevorzugt ist z. B. wenigstens ein einzelner Zickzack- oder Dreiecksgang, wie es in den Fig. 1 bis 3 und in den Fig. 7 bis 10 dargestellt ist. D. h. die beiden Befestigungsbereiche 422 des Lamellenfederelements 42 sind radial auf gleicher Höhe an den betreffenden Pendelmassen 22 befestigt, wobei sich der Federbereich 424 in Radial- R und in Umfangsrichtung U zwischen diesen Pendelmassen 22 erstreckt. Wie z. B. in der Fig. 2 dargestellt, erstreckt sich der Federbereich 424 ausgehend von einer Pendelmasse 22 mit einem Schenkel zunächst in Radialrichtung R nach innen und ungefähr bei der Hälfte der Distanz zwischen den betreffenden Pendelmassen 22 nach einem Umkehrpunkt (Knick, Bogen mit geringem Radius) in Radialrichtung R mit.einem anderen Schenkel wieder nach außen. Die Fig. 3 zeigt ein umgekehrtes Beispiel. Es ist natürlich möglich, eine Mehrzahl von solchen Federgängen anzuwenden. Eine Steifigkeit des Federbereichs 424 kann u. a. durch eine Länge, eine Anzahl und/oder ein Material der Schenkel eingestellt werden.

Gemäß des nicht erfindungsgemäßen Beispiels kann das Lamellenfederelement 42 derart ausgelegt sein, dass dieses bei bestimmten Relativbewegungen zwischen den betreffenden Pendelmassen 22 federweich, d. h. elastisch, und bei bestimmten anderen Relativbewegungen zwischen den betreffenden Pendelmassen 22 federhart, d. h. federnd, ausgebildet ist. Ersteres ist bevorzugt dann der Fall, wenn die betreffenden Pendelmassen 22 z. B. in Umfangsrichtung U vergleichsweise weit voneinander entfernt sind (siehe Fig. 7 und 8). Letzteres z. B. dann, wenn die betreffenden Pendelmassen 22 vergleichsweise nah beieinander angeordnet sind (siehe Fig. 9 und 10). So ist das Lamellenfederelement 42 im Wesentlichen in Radialrichtung R bevorzugt federweich und insbesondere im Wesentlichen in Umfangsrichtung U, abgesehen vom Federbereich 424, ebenfalls bevorzugt federweich ausgelegt. Natürlich ist die Feder des Lamellenfederelements 42 im Wesentlichen in Umfangsrichtung U federnd, also federhart, ausgelegt. - In bevorzugten Ausführungsbeispielen ist wenigstens eine oder eine jeweilige Anbindung des Federbereichs 424 bzw. der Feder an den betreffenden Befestigungsbereich 422 elastisch, d. h. federweich, ausgebildet. Hierdurch können sich betreffende Pendelmassen 22 über einen weiten Bereich hinweg gegenseitig bewegen, ohne dass diese Bewegung durch die Lamellenfederelemente 42 signifikant beeinträchtigt würde. Erst wenn sich die betreffenden Pendelmassen 22 nahe kommen, was z. B. dann der Fall ist, wenn ein Schenkel der Feder des Federbereichs 424 mit seiner Längserstreckung an einer Stirnseite einer Pendelmasse 22 in Umfangsrichtung U anliegt; erst in einem solchen Fall beginnt das Lamellenfederelement 42 eine signifikante Kraft zwischen den beiden Pendelmassen 22 auf diese auszuüben. Ferner ist es bevorzugt, dass das Lamellenfederelement 42 in Axialrichtung A federhart ausgebildet ist, sodass hierdurch Kollisionen zwischen den Pendelmassen 22 und dem Pendelmassenträger 10 vermieden werden können.

Die Fig. 4 und 5 zeigen die zweite Ausführungsform des nicht erfindungsgemäßen Beispiels. Diese ist analog zur ersten Ausführungsform aufgebaut, wobei im Federbereich 424 des Lamellenfederelements 42 in Radialrichtung R zwei einander gegenüberliegende, d. h. voneinander getrennte, Federn mit jeweils einem Federgang vorgesehen sind. Ferner erstreckt sich der jeweilige Befestigungsbereich 422 für die betreffende Pendelmasse 22 vollständig entlang der Radialrichtung R der Pendelmasse 22 und umgreift diese bevorzugt an beiden radialen Enden in Axial- und Umfangsrichtung. Die beiden getrennten Federn des Federbereichs 424 schließen sich dann an die übergriffenen Abschnitte der Befestigungsbereiche 422 zunächst in Umfangsrichtung U an und streben dann jeweils in Richtung einer radialen Mitte in Umfangsrichtung zwischen den betreffenden Pendelmassen 22. Bevor sich die getrennten Federn berühren erstrecken sie sich jeweils in eine Gegenrichtung und schließen zum betreffenden anderen Befestigungsanschnitt 422 auf. Ferner sind die Merkmale der ersten Ausführungsform auf die zweite Ausführungsform und umgekehrt übertragbar. - Es sind gemäß der Erfindung Federelemente 42 anwendbar, die radial innen an der einen und radial außen an der betreffenden anderen Pendelmasse 22 befestigt sind, wobei sich dann der Federbereich 424 schräg zwischen diesen Befestigungen erstreckt; hierbei sind die Anbindungen des Federbereichs 424 an die Befestigungen bevorzugt federhart ausgebildet (in der Zeichnung nicht dargestellt). Zur Führung der Pendelmassen 22 am/im Pendelmassenträger 10 weisen sowohl der Pendelmassenträger 10 und die Pendelmassen 22 bevorzugt gegensinnig gekrümmte Führungsbahnen 130, 230 auf, in welchen Führungselemente 30 die Pendelmassen 22 in Abhängigkeit einer Rotation des Pendelmassenträgers 10 um eine Rotationsachse S beweglich am Pendelmassenträger 10 führen. Gemäß des nicht erfindungsgemäßen Beispiels können bei beiden Ausführungsformen des nicht erfindungsgemäßen Beispiels die Führungsbahnen 130, 230 derart ausgestaltet sein, dass es zu keinen festen Stößen bzw. Anschlägen der Führungselemente 30 an einem jeweiligen inneren Längsende der Führungsbahnen 130, 230 im Pendelmassenträger 10 und/oder in der Pendelmasse 20 kommt. Hierfür weisen die Führungsbahnen 130, 230 einen entsprechenden Freiwinkel bzw. eine Erweiterung auf, der bzw. die die Führungsbahnen 130, 230 derart verlängert, dass bevor ein Führungselement 30 an einem Längsende der betreffenden Führungsbahn 130, 230 anschlägt, betreffende Pendelmassen 22, z. B. wie in den Fig. 9 und 10 dargestellt, sich maximal nah aufeinander zubewegt haben und es bevorzugt zu keiner weiteren im Wesentlichen stoßartigen Verlagerung des Führungselements 30 in der Führungsbahn 130, 230 kommt. Bei maximaler Auslenkung klappen die betreffenden Pendelmassen 22 in Umfangsrichtung U seitlich zusammen, so dass ferner ein Anschlag, abgesehen von dem Lamellenfederelement 42, zwischen den Pendelmassen 22 erfolgt und nicht zwischen einer Pendelmasse 22, einem betreffenden Führungselement 30 und/oder dem Pendelmassenflansch 10. Das Führungselement 30 kann z. B. als ein Abrollelement 30, eine Zylinderrolle 30, ein Gleitelement 30, ein Niet 30 oder ein Stift 30 ausgebildet sein.

Gemäß des nicht erfindungsgemäßen Beispiels wird eine Fliehkraftpendeleinrichtung 1 bzw. ein Fliehkraftpendel zur Verfügung gestellt, dessen Pendelmassen 22 mittels Federelementen 42, insbesondere Blechfedern 42, federnd miteinander mechanisch gekoppelt bzw. verbunden sind, wobei die Führungsbahnen 130, 230 für die Führungselemente 30 im Pendelmassenträger 10 und/oder in den Pendelmassen 20, sowie die Durchgangsausnehmungen 123 im Pendelmassenträger 10 für die Zapfen 423 der Federelemente 42 jeweils einen Freiwinkel zum Zweck einer Geräuschreduzierung und Stoßdämpfung aufweisen.

Bei der ersten Ausführungsform der Erfindung (siehe Fig. 11 bis 16) ist das erfindungsgemäße Dämpferelement 40 für die Fliehkraftpendeleinrichtung 1 als ein Anschlagelement 44 bzw. ein Anschlagpuffer 44 ausgebildet. Hierbei ist das Anschlagelement 44 bevorzugt ein massives Element das insbesondere aus einem harten und/oder verschleißfesten Kunststoff besteht, welches in Umfangsrichtung U des Pendelmassenträgers 10 zwischen zwei direkt benachbarten Pendelmassen 22 oder Pendelmassenpaaren 20 vorgesehen ist. Das Anschlagelement 44 ist dabei in eine Führungsbahn 130 des Pendelmassenträgers 10 eingehängt, in welcher bevorzugt auch eine Pendelmasse 22 bzw. ein Pendelmassenpaar 20 geführt ist. In einem Betrieb der Fliehkraftpendeleinrichtung 1 kann die betreffende Pendelmasse 22 oder das betreffende Pendelmassenpaar 20 am Anschlagelement 44 anschlagen. Bevorzugt sind in der Führungsbahn 130 zueinander direkt benachbarte, also betreffende Pendelmassen 22 oder Pendelmassenpaare 20 gelagert, wobei das Anschlagelement 44 zwischen diesen beiden ebenfalls in dieser Führungsbahn 130 vorgesehen ist. Das Anschlagelement 44 ist derart ausgebildet, dass beim gleichzeitigen direkten Ansitzen betreffender Pendelmassen 22 oder Pendelmassenpaare 20, diese in Umfangsrichtung U nicht direkt aneinander stoßen können. In Übergangsphasen der Fliehkraftpendeleinrichtung 1 sowie bei einer maximalen Auslenkung (siehe Fig. 16) der Pendelmassen 22 oder Pendelmassenpaare 20 werden Zusammenstöße zwischen diesen wirksam verhindert. Analog zu oben wird im Folgenden wiederum nur auf eine Axialseite des Pendelmassenflanschs 10 Bezug genommen, wobei diese Aussagen analog die zusätzliche zweite Axialseite betreffen können.

Das Anschlagelement 44 ist auf einer Axialseite des Pendelmassenträgers 10 als ein langgestreckter Körper ausgebildet, der an den Längsendabschnitten bevorzugt abgerundet ist. Hierbei kann ein radial äußerer Längsendabschnitt in Umfangsrichtung U verdickt ausgebildet sein. Ein Querschnitt dieses Körpers ist in einem Mittenabschnitt bevorzugt im Wesentlichen quadratisch oder rechteckig aufgebaut, wobei die beiden in Umfangsrichtung U liegenden Anschlagsseiten, an welchen die Pendelmassen 22 anschlagen können, bevorzugt im Wesentlichen parallel zueinander liegen. Sie können auch einen kleinen Winkel einschließen, der dem entspricht, welchen die Stirnseiten der betreffenden Pendelmassen 22 bei einer gegenseitigen Anlage einnehmen. Das Anschlagelement 44 ist mit einem vom Körper im Wesentlichen in einem rechten Winkel abstehenden Zylinderabschnitt in der Führungsbahn 130 eingehängt, wobei sich an der dem ersten langgestreckten Körper gegenüberliegenden Axialseite des Pendelmassenträgers 10 bevorzugt ein zweiter im Wesentlichen identischer langgestreckter Körper anschließt, der ebenfalls am Zylinderabschnitt vorgesehen ist. Hierbei ist der Zylinderabschnitt zu einem Längsende des Anschlagelements 44 versetzt angeordnet, so dass sich ein längerer Abschnitt am Pendelmassenträger 10 radial nach innen erstreckt (siehe Fig. 14 und 15); dies kann natürlich auch derart ausgebildet sein, dass der Zylinderabschnitt mittig oder benachbart zum anderen Längsende des Anschlagelements 44 angeordnet ist.

In bevorzugten Ausführungsformen der Erfindung ist das Anschlagelement 44 derart konfiguriert, dass dessen größter radialer Querschnitt in einen Querschnitt der Führungsbahn 130 eingeschrieben werden kann, was in der Fig. 13 verdeutlicht ist. Hierdurch kann das Anschlagelement 44 bequem in die Führungsbahn 130 eingehängt werden. In einem zeitlichen Anschluss daran werden die Pendelmassen 22 vorgesehen, die in allen Stellungen der Fliehkraftpendeleinrichtung 1 den verbleibenden Platz für das Anschlagelement 44 derart einengen, dass dieses nicht mehr aus der Führungsbahn 130 herausfallen kann. - In einer Seitenansicht auf das erfindungsgemäße Anschlagelement 44 für Pendelmassenpaare 20 hat dieses im Wesentlichen die Form eines 'H', wobei ein Steg zwischen den beiden Schenkeln des 'H' versetzt zu einer Mitte der Schenkel angeordnet ist (siehe Fig. 12). Innerhalb der Führungsbahn 130 kann sich das betreffende Anschlagelement 44 pendelnd entlang der Führungsbahn 130 bewegen.

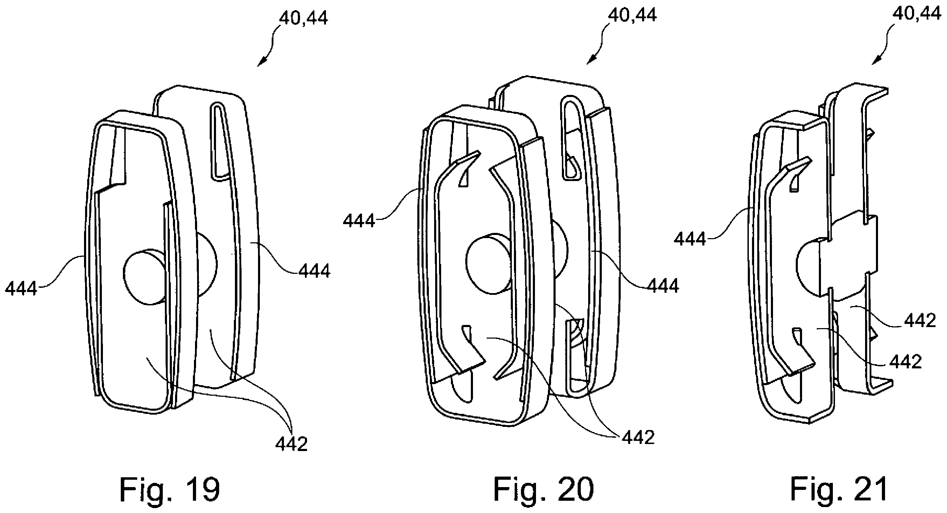

Bei der zweiten Ausführungsform der Erfindung (siehe Fig. 17 bis 21) ist das erfindungsgemäße Dämpferelement 40 für die Fliehkraftpendeleinrichtung 1 als ein Federanschlagelement 44 realisiert. Hierbei kann wiederum ein einzelner Körper für die betreffende Pendelmasse 22 oder es können zwei Körper für Pendelmassenpaare 20 analog zu oben angewendet werden. In letzterem Fall werden, zwei bevorzugt aus einem Federstahlblech geformte Körper bzw. Hälften (Fig. 19 bis 22), z. B. durch Vernieten mit einem Abstandsniet, zu einer Einheit zusammen befestigt. Ein Körper besitzt dabei bevorzugt auf beiden Seiten in Umfangsrichtung U Federeinrichtungen 444, wodurch Anschläge zwischen betreffenden Pendelmassen 22 abgefangen werden können. - Die Federeinrichtungen 444 befinden sich seitlich an einem zur Radialseite des Pendelmassenträgers 10 parallelen Grundkörper 442 des Federanschlagelements 44, von welchem an dessen beiden Umfangsseiten die Federeinrichtungen 444 in einem rechten Winkel weggebogen sind. Hierbei erstrecken sich die flachen Seiten der Federeinrichtungen 444 in Radial- R Axialrichtung A. Eine einzelne Federeinrichtung 444, ist insbesondere als wenigstens ein Federarm 444 oder Federbalken 444 ausgebildet, der sich an einer vom Grundkörper 442 im Wesentlichen senkrecht abstehenden Lasche abstützen kann. Hierbei kann die Federeinrichtung 444 als eine ein- (Fig. 17 und 19) oder eine mehrstufige Blattfeder (Fig. 18, 20 und 21) ausgebildet sein.

Gemäß der Erfindung können bei beiden Ausführungsformen die Führungsbahnen 130, 230 wiederum derart ausgestaltet sein, dass es zu keinen festen Stößen bzw. Anschlägen der Führungselemente 30 an einem jeweiligen inneren Längsende der Führungsbahnen 130, 230 im Pendelmassenträger 10 und/oder in der Pendelmasse 20 kommt. Hierfür weisen die Führungsbahnen 130, 230 einen entsprechenden Freiwinkel bzw. eine Erweiterung auf, der bzw. die die Führungsbahnen 130, 230 derart verlängert, dass bevor ein Führungselement 30 an einem Längsende der betreffenden Führungsbahn 130, 230 anschlägt, betreffende Pendelmassen 22, z. B. wie in der Fig. 16 dargestellt, sich maximal nah aufeinander zubewegt haben und es zu keiner weiteren stoßartigen Verlagerung des Führungselements 30 in der Führungsbahn 130, 230 kommt. Bei maximaler Auslenkung, z. B. bei einem Lastlauf, klappen die Pendelmassen 22 seitlich zusammen, so dass ferner der Anschlag der Pendelmassen 22 beiderseits des betreffenden Anschlagelements 44 erfolgt und nicht zwischen einer betreffenden Pendelmasse 22, einem betreffenden Führungselement 30 und/oder dem Pendelmassenflansch 10.

Gemäß der Erfindung wird eine Fliehkraftpendeleinrichtung 1 bzw. ein Fliehkraftpendel zur Verfügung gestellt, wobei deren bzw. dessen Pendelmassen 22 über Anschlagelemente 44 gegeneinander abstützbar sind, und/oder die Führungsbahnen 130, 230 für die Führungselemente 30 im Pendelmassenträger 10 und in den Pendelmassen 20 jeweils einen Freiwinkel zum Zweck einer Geräuschreduzierung und Stoßdämpfung aufweisen.

### Bezugszeichenliste

- 1: Fliehkraftpendeleinrichtung, insbesondere Trapezfliehkraftpendeleinrichtung; Einrichtung zur drehzahladaptiven Schwingungstilgung
- 10: Pendelmassenträger, Pendelflansch
- 20: Pendelmassenpaar, Tilgermassenpaar, Trägheitsmassenpaar
- 22: einzelne Pendelmasse, einzelne Tilgermasse, einzelne Trägheitsmasse
- 30: Führungselement, insbesondere Abrollelement, Zylinderrolle, Gleitelement, Niet, Stift
- 40: Dämpferelement, Stoßdämpfer
- 42: Federelement, Druckfederelement, Lamellenfeder(element), Streifenfeder(element)
- 44: Anschlagelement, Anschlagpuffer insbesondere massives Element (Kunststoff) oder Federanschlagelement (Metall bzw. Metalllegierung)
- 123: Durchgangsausnehmung für Zapfen 123 des Befestigungsbereichs 422
- 130: Führungsbahn für Führungselement 30 und ggf. Anschlagelement 44 im Pendelmassenträger 10
- 230: Führungsbahn für Führungselement 30 in Pendelmasse 20
- 422: Befestigungsbereich
- 423: Zapfen, Niet, Abstandsniet, Abstandsbolzen
- 424: Federbereich
- 442: Grundkörper
- 444: Federeinrichtung, insbesondere Federarm, Federbalken
- A: Axialrichtung der Fliehkraftpendeleinrichtung 1, des Pendelmassenträgers 10, des Pendelmassenpaars 20, etc.
- R: Radialrichtung der Fliehkraftpendeleinrichtung 1, des Pendelmassenträgers 10, des Pendelmassenpaars 20, etc.
- S: Rotationsachse der Fliehkraftpendeleinrichtung 1
- U: Umfangsrichtung der Fliehkraftpendeleinrichtung 1, des Pendelmassenträgers 10, des Pendelmassenpaars 20, etc

## Patentansprüche

1. Fliehkraftpendeleinrichtung, insbesondere Trapezfliehkraftpendeleinrichtung, für eine Dämpfereinrichtung und/oder eine Drehmomentübertragungseinrichtung, insbesondere für einen Antriebsstrang eines Kraftfahrzeugs, mit
einem um eine Rotationsachse (S) rotierbaren Pendelmassenträger (10), an welchem in Umfangsrichtung (U) eine Mehrzahl gegenüber dem Pendelmassenträger (10) bewegbare Pendelmassen (22) oder Pendelmassenpaare (20) vorgesehen sind, **dadurch gekennzeichnet, dass**
zwei in Umfangsrichtung (U) des Pendelmassenträgers (10) direkt benachbarte Pendelmassen (22) oder Pendelmassenpaare (20) mit Hilfe eines umfangsseitig zwischen den benachbarten Pendelmassen angeordneten und unabhängig von den Pendelmassen bewegbaren Anschlagselements (44) mechanisch koppelbar sind, wobei das Anschlagelement (44) und/oder die betreffende Führungsbahn (130) im Pendelmassenträger (10) derart dimensioniert ist bzw. sind, dass das Anschlagelement (44) seitlich in dieses einhängbar ist.

2. Fliehkraftpendeleinrichtung nach Anspruch 1, **dadurch gekennzeichnet, dass** das Anschlagelement (44), insbesondere ein Anschlagkörper des Anschlagelements (44), ein massives Element (44) ist, das bevorzugt aus einem Kunststoff aufgebaut ist, und das Anschlagelement (44) insbesondere als ein langgestreckter Körper ausgebildet ist, dessen Anschlagflächen für die Pendelmassen (22) oder Pendelmassenpaare (20) in Umfangsrichtung (U) im Wesentlichen parallel zueinander ausgerichtet sind.

3. Fliehkraftpendeleinrichtung nach einem der Ansprüche 1 oder 2, **dadurch gekennzeichnet, dass** das Anschlagelement (44) als ein Federanschlagelement (44) ausgebildet ist, das in Umfangsrichtung (U) an seinen beiden Seiten jeweils wenigstens eine Federeinrichtung (444) aufweist, wobei
eine einzelne Federeinrichtung (444) des Federanschlagelements (44) bevorzugt als eine ein- oder mehrstufige Parallel- oder Reihenanordnung von Blattfedern ausgebildet ist, an welchen eine betreffende Pendelmasse (22) oder ein betreffendes Pendelmassenpaar (20) ansitzbar ist.

4. Fliehkraftpendeleinrichtung nach Anspruch 3, **dadurch gekennzeichnet, dass** eine Führungsbahn (130) des Pendelmassenträgers (10), eine Führungsbahn (230) einer betreffenden Pendelmasse (22) oder eines betreffenden Pendelmassenpaars (20) und ein jeweiliges Führungselement (30) derart aufeinander abgestimmt bzw. ausgelegt sind, dass
bei Übergangsphasen der Pendelmassen (22) oder der Pendelmassenpaare (20) und/oder einem maximalen Schwingwinkel der Fliehkraftpendeleinrichtung (1) ein gegenseitiger Anschlag, abgesehen von den Federanschlagelementen (44), zwischen den Pendelmassen (22) oder den Pendelmassenpaaren (20) erfolgt, wobei ferner bevorzugt ein gegenseitiger Anschlag (10, 30, 20) in Umfangsrichtung (U) im Wesentlichen vermieden ist.

5. Fliehkraftpendeleinrichtung nach einem der Ansprüche 1 bis 4, **dadurch gekennzeichnet, dass**:
• Führungsbahnen (130, 230) des Pendelmassenträgers (10) und/oder der Pendelmasse (20) oder der Pendelmassenpaare (20) zur Vermeidung von Kollisionen zwischen Führungselementen (30) und dem Pendelmassenträger (10) einen Freiwinkel aufweisen;
• die betreffende Führungsbahn (130) im Pendelmassenträger (10), das Anschlagelement (44) und die Pendelmassen (22) bzw. die Pendelmassenpaare (20) derart angeordnet und/oder ausgelegt sind, dass das Anschlagelement (44) auch in ungünstigen Positionen nicht aus der Führungsbahn (130) herausfallen kann;
•
• das Anschlagelement (44) für betreffende Pendelmassenpaare (20) gedoppelt ausgebildet ist und die beiden Elemente bevorzugt über ein Abstandsniet an einander festgelegt sind;
• das Anschlagelement (44) einstückig, insbesondere stofflich einstückig ausgebildet ist, und bevorzugt entweder einen harten und/oder verschleißfesten Kunststoff oder bevorzugt einen Federstahl aufweist;
• eine maximale axiale Tiefe einer Anschlagfläche oder eines Federbereichs (424) des Anschlagelements (42) der einer Pendelmasse (22) entspricht;
und/oder
• das im Pendelmassenträger (10) montierte Anschlagelement (44) an einem radial äußeren Endabschnitt in Umfangsrichtung (U) breiter ausgebildet ist als an einem Mittenabschnitt oder einem radial inneren Endabschnitt.

6. Dämpfereinrichtung oder Drehmomentübertragungseinrichtung insbesondere für einen Antriebsstrang eines Kraftfahrzeugs;
z. B. Fliehkraftpendel, Drehmomentwandler, Kupplung, Föttingerkupplung, Kupplungsbaugruppe, Dämpfer, Drehschwingungsdämpfer, Turbinendämpfer, Pumpendämpfer, Zweimassenwandler oder Zweimassenschwungrad, oder Kombinationen davon; **dadurch gekennzeichnet, dass**
die Dämpfereinrichtung bzw. die Drehmomentübertragungseinrichtung eine Fliehkraftpendeleinrichtung (1) aufweist, die nach einem der Ansprüche 1 bis 5 ausgebildet ist.

## Claims

1. Centrifugal force pendulum device, in particular trapezoidal centrifugal force pendulum device, for a damper device and/or a torque transmission device, in particular for a drive train of a motor vehicle, having a pendulum mass carrier (10) which can be rotated about a rotational axis (S) and on which a plurality of pendulum masses (22) or pendulum mass pairs (20) which can be moved with respect to the pendulum mass carrier (10) are provided in the circumferential direction (U), **characterized in that** two pendulum masses (22) or pendulum mass pairs (20) which are directly adjacent in the circumferential direction (U) of the pendulum mass carrier (10) can be coupled mechanically with the aid of a stop element (44) which is arranged on the circumferential side between the adjacent pendulum masses and can be moved independently of the pendulum masses, the stop element (44) and/or the relevant guide track (130) in the pendulum mass carrier (10) being dimensioned in such a way that the stop element (44) can be hooked laterally into it.

2. Centrifugal force pendulum device according to Claim 1, **characterized in that** the stop element (44), in particular a stop body of the stop element (44), is a solid element (44) which is preferably constructed from a plastic, and the stop element (44) is configured, in particular, as an elongate body, the stop faces of which for the pendulum masses (22) or pendulum mass pairs (20) are oriented substantially parallel to one another in the circumferential direction (U).

3. Centrifugal force pendulum device according to either of Claims 1 and 2, **characterized in that** the stop element (44) is configured as a spring stop element (44) which has in each case at least one spring device (444) on its two sides in the circumferential direction (U), an individual spring device (444) of the spring stop element (44) preferably being configured as a single-stage or multiple-stage parallel or series arrangement of leaf springs, on which a relevant pendulum mass (22) or a relevant pendulum mass pair (20) can be seated.

4. Centrifugal force pendulum device according to Claim 3, **characterized in that** a guide track (130) of the pendulum mass carrier (10), a guide track (230) of a relevant pendulum mass (22) or a relevant pendulum mass pair (20) and a respective guide element (30) are adapted or designed with respect to one another that, in the case of transitional phases of the pendulum masses (22) or the pendulum mass pairs (20) and/or a maximum swing angle of the centrifugal force pendulum device (1), mutual contact takes place between the pendulum masses (22) or the pendulum mass pairs (20), apart from the spring stop elements (44), mutual contact (10, 30, 20) in the circumferential direction (U) preferably being substantially avoided, furthermore.

5. Centrifugal force pendulum device according to one of Claims 1 to 4, **characterized in that**:
• guide tracks (130, 230) of the pendulum mass carrier (10) and/or the pendulum mass (20) or the pendulum mass pairs (20) have a clearance angle in order to avoid collisions between guide elements (30) and the pendulum mass carrier (10);
• the relevant guide track (130) in the pendulum mass carrier (10), the stop element (44) and the pendulum masses (22) or the pendulum mass pairs (20) are arranged and/or designed in such a way that the stop element (44) cannot fall out of the guide track (130) even in unfavourable positions;
• the stop element (44) for relevant pendulum mass pairs (20) is of double configuration, and the two elements are preferably fixed onto one another via a spacer rivet;
• the stop element (44) is configured in one piece, in particular is configured in one piece in material terms, and preferably comprises either a hard and/or wear-resistant plastic or preferably a spring steel;
• a maximum axial depth of a stop face or a spring region (424) of the stop element (42) corresponds to that of a pendulum mass (22);
and/or
• the stop element (44) which is mounted in the pendulum mass carrier (10) is of wider configuration in the circumferential direction (U) on a radially outer end section than on a central section or a radially inner end section.

6. Damper device or torque transmission device, in particular for a drive train of a motor vehicle; for example a centrifugal force pendulum, a torque converter, a coupling, a Föttinger coupling, a coupling assembly, a damper, a torsional vibration damper, a turbine damper, a pump damper, a dual-mass converter or a dual-mass flywheel, or a combination thereof; **characterized in that** the damper device or the torque transmission device has a centrifugal force pendulum device (1) which is configured according to one of Claims 1 to 5.

## Revendications

1. Dispositif pendulaire centrifuge, en particulier dispositif pendulaire centrifuge à trapèze pour un dispositif d'amortissement et/ou un dispositif de transmission de couple, en particulier pour une chaîne cinématique d'un véhicule automobile, avec un support de masses pendulaires (10) pouvant tourner autour d'un axe de rotation (S), sur lequel il est prévu en direction périphérique une multiplicité de masses pendulaires (22) ou de paires de masses pendulaires (20) mobiles par rapport au support de masses pendulaires (10), **caractérisé en ce que** deux masses pendulaires (22) ou paires de masses pendulaires (20) directement voisines en direction périphérique (U) du support de masses pendulaires (10) peuvent être couplées mécaniquement à l'aide d'un élément de butée (44) disposé côté périphérie entre les masses pendulaires voisines et déplaçable indépendamment des masses pendulaires, dans lequel l'élément de butée (44) et/ou la piste de guidage correspondante (130) dans le support de masses pendulaires (10) est/sont dimensionné(s) de telle manière que l'élément de butée (44) puisse être suspendu latéralement dans celle-ci.

2. Dispositif pendulaire centrifuge selon la revendication 1, **caractérisé en ce que** l'élément de butée (44), en particulier un corps de butée de l'élément de butée (44), est un élément massif (44), qui est de préférence fabriqué en matière plastique, et l'élément de butée (44) est formé en particulier par un corps allongé, dont les faces de butée pour les masses pendulaires (22) ou les paires de masses pendulaires (20) en direction périphérique (U) sont orientées essentiellement parallèlement l'une à l'autre.

3. Dispositif pendulaire centrifuge selon une des revendications 1 ou 2, **caractérisé en ce que** l'élément de butée (44) est formé par un élément de butée à ressort (44), qui présente sur ses deux côtés en direction périphérique (U) respectivement au moins un dispositif de ressort (444), dans lequel un dispositif de ressort unique (444) de l'élément de butée à ressort (44) est formé de préférence par un ensemble à un ou plusieurs étages en parallèle ou en série de lames de ressort, sur lesquelles une masse pendulaire correspondante (22) ou une paire de masses pendulaires correspondante (22) peut être placée.

4. Dispositif pendulaire centrifuge selon la revendication 3, **caractérisé en ce qu'**une piste de guidage (130) du support de masses pendulaires (10), une piste de guidage (230) d'une masse pendulaire correspondante (22) ou d'une paire de masses pendulaires correspondante (20) et un élément de guidage respectif (30) sont accordés l'un à l'autre ou conçus de telle manière que, lors de phases de transition des masses pendulaires (22) ou des paires de masses pendulaires (20) et/ou lors d'un angle d'oscillation maximal du dispositif pendulaire centrifuge (1), il se produise une butée mutuelle, abstraction faite des éléments de butée à ressort (44), entre les masses pendulaires (22) ou les paires de masses pendulaires (20), dans lequel en outre une butée mutuelle (10, 30, 20) en direction périphérique (U) est de préférence essentiellement évitée.

5. Dispositif pendulaire centrifuge selon l'une quelconque des revendications 1 à 4, **caractérisé en ce que**:
• des pistes de guidage (130, 230) du support de masses pendulaires (10) et/ou des masses pendulaires (22) ou des paires de masses pendulaires (20) présentent un angle libre pour éviter des collisions entre des éléments de guidage (30) et le support de masses pendulaires (10);
• la piste de guidage correspondante (130) dans le support de masses pendulaires (10), l'élément de butée (44) et les masses pendulaires (22) ou les paires de masses pendulaires (20) sont disposés et/ou conçus de telle manière que l'élément de butée (44) ne puisse pas tomber hors de la piste de guidage (130), même dans des positions défavorables;
• l'élément de butée (11) pour des paires de masses pendulaires correspondantes (20) est doublé et les deux éléments sont de préférence fixés l'un à l'autre au moyen d'un rivet d'écartement;
• l'élément de butée (44) est réalisé en une seule pièce, en particulier matériellement en une seule pièce, et présente de préférence soit une matière plastique dure et/ou résistante à l'usure soit de préférence un acier à ressort;
• une profondeur axiale maximale d'une face de butée ou d'une région de ressort (424) de l'élément de butée (42) correspond à celle d'une masse pendulaire (22) ;
• et/ou
• l'élément de butée (44) monté dans le support de masses pendulaires (10) est plus large en direction périphérique (U) à une partie d'extrémité radialement extérieure qu'à une partie moyenne ou à une partie d'extrémité radialement intérieure.

6. Dispositif d'amortissement ou dispositif de transmission de couple en particulier pour une chaîne cinématique d'un véhicule automobile;
par exemple pendule centrifuge, convertisseur de couple, embrayage, coupleur hydrodynamique, ensemble d'embrayage, amortisseur, amortisseur de vibrations de torsion, amortisseur de turbine, amortisseur de pompe, convertisseur bi-masse, volant bi-masse, ou combinaisons de ceux-ci;
**caractérisé en ce que** le dispositif d'amortissement ou le dispositif de transmission de couple présente un dispositif pendulaire centrifuge (1), qui est réalisé selon l'une quelconque des revendications 1 à 5.
